# EUROPÄISCHE PATENTSCHRIFT

(11) **EP 0 935 056 B1**
(45) Veröffentlichungstag und Bekanntmachung des Hinweises auf die Patenterteilung: **19.12.2001**
(21) Anmeldenummer: 99101847.4
(22) Anmeldetag: 28.01.1999
(51) Int. Cl.: F01N 3/20

(54) **Verfahren zum schnellen Erreichen der Aktivierungstemperatur eines motornah angeordneten Katalysators einer fremdgezündeten Brennkraftmaschine**
Process for quickly reaching the activation temperature of a catalyst mounted close to a spark ignition internal combustion engine
Procédé pour atteindre rapidement la température d'activation d'un catalyseur placé près d'un moteur à combustion interne à allumage commandé

(30) Priorität: 05.02.1998 DE 19804429
(43) Veröffentlichungstag der Anmeldung: 11.08.1999
(73) Patentinhaber: ADAM OPEL AG, 65423 Rüsselsheim (DE)
(72) Erfinder: Von Brand, Heinz-Ewo Dipl.-Ing., 55545 Bad Kreuznach (DE)
(74) Vertreter: Kümpfel, Heinz, Dipl.-Ing.

(56) Entgegenhaltungen:
- EP-A- 0 718 477
- WO-A-92/22734
- WO-A-97/25525
- GB-A- 2 274 793
- GB-A- 2 277 126
- US-A- 5 050 551
- US-A- 5 642 705

## Beschreibung

Die Erfindung betrifft ein Verfahren zum schnellen Erreichen der Aktivierungstemperatur eines motornah angeordneten Katalysators im Abgasstrang einer mehrzylindrigen fremdgezündeten Brennkraftmaschine gemäß dem Oberbegriff des Patentanspruches 1.

Zur schnellen Aufheizung von Katalysatoren im Abgasstrang von Brennkraftmaschinen ist es bekannt, oberhalb des Katalysators in Strömungsrichtung des Abgases gesehen einen Nachbrenner vorzusehen, der mit einer besonderen Kraftstoffversorgung und mit Zündmitteln versehen bei kaltem Katalysator eine Flamme erzeugt, die beim Start der Brennkraftmaschine in die Abgase hinein brennt, so daß auch die im Abgas enthaltenen brennbaren Substanzen nachverbrennen und insgesamt das Abgas aufgeheizt wird. Die Wärme des Abgases überträgt sich dann auf den Katalysator.

Bekannt ist es auch, den Nachbrenner mit einer Zündvorrichtung zu versehen, die ein Gemisch aus dem Abgas und einem dem Abgasstrom zugeführten Frischluftstrom entflammt, wobei der Frischluftstrom durch eine Luftpumpe zugeführt wird.

Mit EP-A-0 718 477 ist ein Heizsystem für einen Katalysator eines fremdgezündeten Mehrzylindermotors beschrieben, zu dessen Betrieb ein gattungsgemäßes Verfahren vorgeschlagen ist. Allerdings ist zum Zünden des Gasgemisches in einem dem Katalysator vorgelagerten Brenner eine besondere Zündeinrichtung erforderlich, die von einer elektronischen Steuereinheit angesteuert ist. Dies erfordert relativ hohen technischen Aufwand. Falls die Zündeinrichtung nicht ständig arbeitet, sondern nur während der Aufheizzeit des Katalysators, sind auch besondere Vorkehrungen zur Funktionsüberwachung und Reinigung erforderlich. Dies erhöht den Aufwand weiter. Wird die Zündeinrichtung während des Motorbetriebes ständig betrieben, dann wird sie relativ schnell verschleißen. Außerdem verbraucht sie auch ständig Energie.

Mit DE 39 33 925 A1 ist eine Vorrichtung zur Abgasnachbehandlung an einer Brennkraftmaschine dargestellt, bei welcher die Brennkammer eines Nachbrenners mit einer Flammenhaltevorrichtung versehen ist, damit die Flamme örtlich fixiert und ein stabiles Betriebsverhalten erzielt werden kann.

Der Nachteil dieser bekannten Verfahren und Einrichtungen besteht in dem relativ hohen apparativen Aufwand, der zur Realisierung erforderlich ist.

Mit DE 44 27 200 A1 ist eine quantitätsgeregelte mehrzylindrige Brennkraftmaschine mit einem zeitweise unbefeuert betreibbaren Zylinder beschrieben, wobei der zeitweise unbefeuerte Zylinder mit einer maximal möglichen Frischluftmenge beschickt wird, das dem Abgas der befeuerten Zylinder zugemischt wird. Der unbefeuerte Zylinder wirkt bei einem Kaltstart somit als Luftpumpe zur Zuführung von Luftsauerstoff zum Abgas der befeuerten Zylinder. Damit kann eine Nachverbrennung dieses Abgasstromes erreicht werden, welche dazu beiträgt, daß eine in der Abgasanlage der Brennkraftmaschine vorgesehene als Katalysator wirkende Abgasreinigungsanlage im Anschluß an einen Kaltstart der Brennkraftmaschine beschleunigt auf ihre Starttemperatur gebracht wird. Die Wirkung dieser Vorrichtung übersteigt jedoch die einer üblichen Sekundärluftpumpe nicht.

Der Erfindung liegt die Aufgabe zugrunde, ein Verfahren zu schaffen, welches ohne erheblichen apparativen Aufwand ein schnelles Aufheizen eines im Abgasstrang einer mehrzylindrigen fremdgezündeten Brennkraftmaschine motornah angeordneten Katalysators auf seine Starttemperatur ermöglicht.

Die Erfindung löst diese Aufgabe mit den Merkmalen des Anspruches 1. Eine vorteilhafte Weiterbildung der Erfindung ist Gegenstand des Unteranspruchs 2.

Durch das Ausblenden der Zündung an einem von mehreren Zylindern und das gleichzeitige Anfetten des Ladungsgemisches für alle Zylinder bei einem Kaltstartvorgang liegt im Abgasrohr vor dem Katalysator ein brennbares Gemisch vor, welches durch an sich bekannte Zündmittel gezündet werden kann. Die dabei entstehende Flamme erreicht den Katalysator und heizt diesen innerhalb weniger Sekunden auf die Starttemperatur auf. Die Zündung des im Abgasrohr befindlichen brennbaren Gemisches kann in besonders vorteilhafter Weise dadurch erfolgen, daß der Zündzeitpunkt zumindest eines der befeuerten Zylinder auf "spät" gestellt wird, so daß beim Öffnen des Auslaßventils das ausgeschobene Gas noch brennt und so das im Abgasrohr vorliegende brennbare Gemisch entflammt.

Es kann vorteilhaft sein, daß nicht immer die Zündung des gleichen Zylinders bei einem Kaltstart ausgeblendet wird, sondern daß über die Motorsteuerung ausgewählt alle Zylinder abwechselnd daran teilnehmen. Damit kann z. B. eine ungleiche zeitliche Belastung der Zündkerzen an den Zylindern vermieden werden.

Ein Ausführungsbeispiel dieses erfindungsgemäßen Verfahrens ist nachstehend anhand eines Flußdiagramms näher erläutert.

Mit dem Start einer mehrzylindrigen fremdgezündeten Brennkraftmaschine wird gemäß Aktivität 1 geprüft, ob es sich um einen Kaltstart oder einen Warmstart handelt. Weist bei dem Start der im Abgasstrang der Brennkraftmaschine befindliche Katalysator eine Temperatur auf, die unterhalb seiner Starttemperatur liegt, dann wird gemäß Aktivität 2 über die Motorsteuerung das Ladungsgemisch aller Zylinder angefettet auf einen Wert von λ = 0,5 bis 0,6. Gleichzeitig wird gemäß Aktivität 3 bei einem der Zylinder, nämlich dem Zylinder x von N-Zylindern, die Zündung ausgeblendet, so daß dessen Ladung unverbrannt in das Abgasrohr vor dem Katalysator ausgeschoben wird. Das jetzt im Abgasrohr vor dem Katalysator befindliche brennbare Gemisch wird gezündet, indem gemäß Aktivität 4 der Zündzeitpunkt eines der befeuerten Zylinder, nämlich der Zylinder (x+a), soweit auf "spät" verstellt wird, daß beim Öffnen des Auslaßventils brennendes Gemisch in das Abgasrohr geschoben wird. Die Flamme des im Abgasrohr verbrennenden Gemisches erreicht den Katalysator und heizt diesen in wenigen Sekunden auf seine Starttemperatur auf. Ist die Starttemperatur gemäß Aktivität 5 erreicht, dann wird gleichzeitig der Zündzeitpunkt des Zylinders (x+a) gemäß Aktivität 6 auf "normal" zurückgesetzt, die Zündung des Zylinders x gemäß Aktivität 7 wieder eingeschaltet und die Gemischzusammensetzung auf λ = 1 gemäß Aktivität 8 eingeregelt. Der Motorbetrieb wird danach gemäß Aktivität 9 bei λ = 1 fortgesetzt.

Wird beim Start der Brennkraftmaschine erkannt, daß der Katalysator bereits seine Starttemperatur aufweist, dann wird der Katalysator-Heizvorgang übersprungen und es findet Motorbetrieb bei λ = 1 statt.

Mit dem vorgeschlagenen Verfahren ist es möglich, daß der Katalysator im Abgasstrang einer Brennkraftmaschine ohne apparativen Aufwand und lediglich durch eine Anpassung der Software der Motorsteuerung aufheizbar ist und dabei sehr schnell auf seine Betriebstemperatur gebracht werden kann, so daß die Umweltbelastung durch ungereinigte Abgase beim Kaltstart einer Brennkraftmaschine minimiert sind.

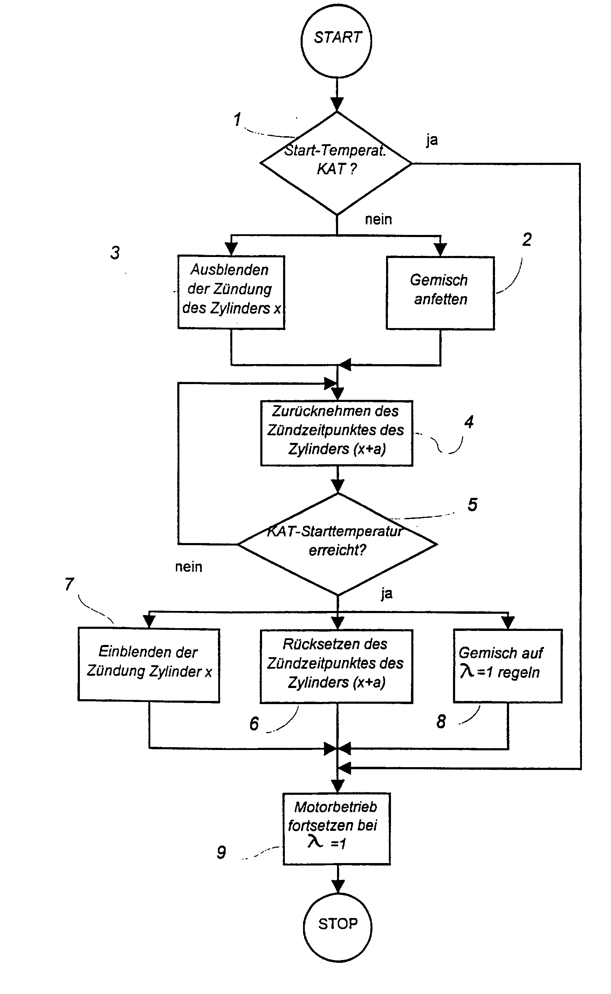

## Patentansprüche

1. Verfahren zum schnellen Erreichen der Aktivierungstemperatur eines motornah angeordneten Katalysators im Abgasstrang einer mehrzylindrigen fremdgezündeten Brennkraftmaschine, mit den Schritten
- Erfassen der aktuellen Kat-Temperatur und Prüfen, ob diese aktuelle Temperatur unterhalb der Aktivierungstemperatur des Katalysators liegt,
- bei Erkennen einer Katalysatortemperatur niedriger als die Aktivierungstemperatur Anfetten des Gemisches auf einen Wert von λ = 0,1 bis 0,6 und gleichzeitiges
- Ausblenden der Zündung mindestens eines Zylinders,
- Zündung des dadurch im Abgasrohr befindlichen brennbaren Gemisches vor dem Katalysator,
- bei erreichter Aktivierungstemperatur des Katalysators Weiterbetrieb aller Zylinder mit der für die Brennkraftmaschine bei Dauerbetrieb vorgesehenen Gemischzusammensetzung und Zündungsparameter,
**dadurch gekennzeichnet, daß** zur Zündung des im Abgasrohr befindlichen brennbaren Gemisches der Zündzeitpunkt mindestens eines der befeuerten Zylinder auf "spät" gestellt wird.

2. Verfahren nach Anspruch 1, **dadurch gekennzeichnet, daß** das Ausblenden der Zündung von Start zu Start abwechselnd von einem zum anderen Zylinder erfolgt.

## Claims

1. Method for quickly reaching the activating temperature of a catalyser arranged close to the engine in the exhaust pipe of a multi-cylinder spark ignition internal combustion engine, with the stages
- Detecting the current catalyser temperature and testing whether this current temperature is below the activating temperature of the catalyser,
- on recognising that the catalyser temperature is lower than the activating temperature, enriching the mixture to a value of λ = 0,1 to 0,6 and simultaneously
- tuning-out the ignition of at least one cylinder,
- igniting the combustible mixture thus provided in the exhaust pipe before the catalyser,
- on reaching the activating temperature of the catalyser, further operation of all cylinders with the mixture composition and ignition parameters prescribed for the internal combustion engine operating continuously,
- **characterised in that** for igniting the combustible mixture located in the exhaust gas pipe, the ignition point of at least one of the ignition cylinders is set to "retarded".

2. Method according to claim 1, **characterised in that** the tuning out of the ignition from start to start takes place alternately from one cylinder to the other.

## Revendications

1. Procédé pour atteindre rapidement la température d'activation d'un catalysateur placé dans la chaîne d'échappement près d'un moteur à combustion interne à allumage commandé multi-cylindre, comprenant les étapes qui consistent :
- à mesurer la température de catalysateur actuelle et examiner si cette température actuelle est inférieure à la température d'activation du catalysateur,
- en cas de détection d'une température de catalysateur inférieure à la température d'activation, à augmenter la richesse du mélange pour obtenir une valeur λ = 0,1 à 0,6 et, simultanément
- à couper l'allumage d'au moins un cylindre,
- à allumer le mélange combustible qui est ainsi présent dans le tuyau d'échappement, en amont du catalysateur,
- lorsque la température d'activation du catalysateur est atteinte, à faire fonctionner tous les cylindres avec la composition de mélange et les paramètres d'allumage prévus pour le moteur à combustion interne en fonctionnement continu,
**caractérisé en ce que** pour allumer le mélange combustible présent dans le tuyau d'échappement, on règle sur « retardé » l'instant d'allumage d'au moins un des cylindres en service.

2. Procédé selon la revendication 1, **caractérisé en ce que** la coupure de l'allumage, de démarrage en démarrage, est réalisée alternativement sur un cylindre puis sur un autre.
